Europäisches Patentamt

(19) European Patent Office

Office européen des brevets

(11) Numéro de publication : **0 317 423 B1**

(12) # FASCICULE DE BREVET EUROPEEN

(45) Date de publication du fascicule du brevet :
**02.10.91 Bulletin 91/40**

(51) Int. Cl.$^5$ : **B60B 37/10, B60B 27/00, G01P 3/48, F16C 19/52**

(21) Numéro de dépôt : **88402868.9**

(22) Date de dépôt : **15.11.88**

(54) **Montage de moyeu de roue non motrice de véhicule équipé d'un dispositif à pulseur et capteur pour mesure de vitesse de rotation de la roue.**

(30) Priorité : **16.11.87 FR 8715794**

(43) Date de publication de la demande :
**24.05.89 Bulletin 89/21**

(45) Mention de la délivrance du brevet :
**02.10.91 Bulletin 91/40**

(84) Etats contractants désignés :
**DE ES GB IT SE**

(56) Documents cités :
**FR-A- 2 133 955**
**US-A- 3 928 780**
**AUTOMOTIVE ENGINEER, vol. 5, no. 1, février/mars 1980, page 62, St. Edmunds, Suffolk, GB; "Automotive hub design - part 2"**

(73) Titulaire : **SKF FRANCE**
**8, Avenue Réaumur**
**F-92142 Clamart Cédex (FR)**

(72) Inventeur : **Caron, Fabrice,**
**2, Allée Arcoat**
**F-78 180 Montigny-le Bretoneux (FR)**

(74) Mandataire : **Casalonga, Axel et al**
**BUREAU D.A. CASALONGA - JOSSE**
**Morassistrasse 8**
**W-8000 München 5 (DE)**

## Description

La présente invention concerne les montages de moyeux de roue non motrice de véhicule utilisant un roulement à double rangée de billes ou de rouleaux du type dit "intégré" tel que défini dans le préambule de la revendication 1, ainsi qu'un ensemble pulseur/capteur logé dans ce roulement et destiné à transmettre à un dispositif antiblocage de roue (ou ABS) les informations sur la vitesse de rotation de la roue.

La solution la plus utilisée actuellement est décrite dans le document FR-A-2570143. Le pulseur est emmanché sur une portée usinée sur le diamètre extérieur de la bague extérieure tournante du roulement et du côté opposé à la fixation de la roue. Le capteur est disposé en regard du pulseur en étant porté par une partie fixe du véhicule radialement extérieure au pulseur.

Les principaux inconvénients d'un tel dispositif sont :
— l'usinage coûteux de la portée supplémentaire de fixation du pulseur,
— l'encombrement radial non négligeable de l'ensemble,
— l'exposition du pulseur et du capteur aux agents extérieurs, tels que pluie, salissures et projections diverses, d'où résultent des risques de corrosion du pulseur ou des perturbations possibles de fonctionnement,
— les risques d'endommagement du pulseur lors de la manipulation du roulement,
— l'influence du serrage du pulseur sur le jeu de fonctionnement interne du roulement, et
— l'inaccessibilité du dispositif après montage sur véhicule.

On connaît également, d'après le document FR-A-2301014, un roulement dans lequel le pulseur et le capteur sont logés dans le volume interne du roulement, mais dans ce cas il est nécessaire de concevoir spécialement le roulement et lui donner des formes et dimensions adaptées à la réception du capteur et du pulseur, d'où résultent des coûts de fabrication supplémentaires élevés.

Selon une autre solution, décrite dans le document FR-A-2558223, le pulseur et le capteur sont logés à l'intérieur de flasques emmanchés sur des portées internes du roulement, avec comme inconvénients que le système est délicat, qu'il nécessite de manipuler le roulement avec les fils de sortie du capteur en place, ce qui comporte des risques d'endommagement de l'ensemble, enfin qu'une fois monté sur véhicule, il n'est plus possible de changer le capteur sans démonter le roulement.

On connait par ailleurs, d'après le document US-A-3928780, un montage pour moyeu de zone avec le pulseur et le capteur logés dans l'alésage d'une protubérance tubulaire fermée dudit moyeu. Mais cette solution nécessite un usinage particulier dans la paroi de l'alésage pour le montage du pulseur, et un support radial spécialement conçu pour le montage du capteur.

Le but de l'invention est d'éliminer les inconvénients précédents, c'est-à-dire de réaliser un montage de moyeu avec pulseur et capteur qui ne nécessite pas un aménagement particulier du roulement, qui assure la protection complète du pulseur et du capteur, et qui néanmoins permette un accès facile au pulseur et au capteur en vue d'un contrôle ou d'un échange éventuels sans démontage du roulement.

L'invention consiste, dans un roulement du type intégré, non spécialement conçu, à disposer le pulseur et le capteur à l'intérieur d'un volume délimité radialement par la surface inférieure cylindrique de la protubérance tubulaire de la bague extérieure tournante du roulement servant au centrage du disque ou du tambour de frein et de la roue, et axialement, d'une part, par un plan passant par l'extrémité libre de la protubérance tubulaire, et d'autre part, par un plan passant par la grande face de la bague intérieure du roulement située du côté de l'écrou de blocage, le pulseur comportant une partie en forme de couronne cylindrique dans laquelle sont pratiquées des encoches et qui s'emmanche dans l'alésage de la protubérance tubulaire.

A cet effet, le pulseur est simplement emmanché dans l'alésage cylindrique de la protubérance tubulaire sans aucun usinage supplémentaire, tandis que le capteur est placé dans un logement situé, soit dans l'écrou, soit dans une pièce annexe immmobilisée sur ou par l'écrou.

Selon un mode particulier de réalisation de l'invention, le pulseur comporte une partie radiale d'extrémité dirigée vers l'intérieur, située du côté de la bague intérieure du roulement proche de l'écrou, et munie d'une ouverture circulaire centrale ménageant avec ladite bague intérieure un passage étroit.

D'autres particularités de l'invention apparaîtront dans la description qui va suivre d'un mode de réalisation pris comme exemple et représenté sur le dessin annexé, sur lequel :
la figure 1 représente en coupe axiale un premier mode de réalisation ;
la figure 2 représente le chapeau de l'écrou vu en bout selon II de la figure 1 ;
la figure 3 représente un fragment du développement du pulseur ;
la figure 4 est une coupe axiale d'un second mode de réalisation ;
la figure 5 est une vue partielle en bout selon V de la figure 4 ;
la figure 6 est une coupe axiale d'un troisième mode de réalisation ;
la figure 7 est une vue partielle en bout selon VII de la figure 6 ; et
la figure 8 est une coupe axiale partielle à plus grande échelle d'une variante de réalisation du pulseur.

La présente invention concerne le montage de moyeux de roue non motrice de véhicule, comportant:

— un roulement à billes ou à rouleaux de type "intégré" à deux rangées d'éléments roulants 1, ce type de roulement étant caractérisé, par rapport à un roulement à double rangée d'éléments roulants classique, par le fait que sa bague extérieure 2 comporte :

• un flanc 3 pourvu de trous 4 pour la fixation directe du disque de frein 5 et de la roue 6 ;

• une protubérance tubulaire 7 faisant saillie axialement par rapport au flanc 3 et comportant une ou plus généralement deux portées 8 et 9 pour le centrage respectivement du disque de frein 5 et de la roue 6 sur le roulement. Cette protubérance tubulaire 7 comporte en outre un alésage 10 de dégagement intérieur servant, d'une part, au passage de celle 11 des bagues intérieures 11 et 12 du roulement située du côté de cette protubérance 7, et d'autres éléments internes du roulement lors de son assemblage, d'autre part, à l'emmanchement et au centrage d'un capot de protection 13 venant fermer l'ensemble une fois le roulement fixé sur la fusée 14 par l'écrou de blocage 15.

— la fusée 14 susmentionnée, sur laquelle sont fixées les bagues intérieures 11 et 12 du roulement par ledit écrou de blocage 15.

— un pulseur 16, encore appelé roue phonique, qui a la forme générale d'une couronne cylindrique munie de perforations radiales 17 ou de dents.

— un capteur 18 destiné à détecter la rotation du pulseur 16 et à transmettre les informations au système électronique du dispositif antiblocage par l'intermédiaire de fils électriques 19.

C'est le passage des dents ou des perforations radiales 17 du pulseur 16 devant le capteur 18 qui génère des impulsions électriques dont la fréquence est proportionnelle à la vitesse de rotation de la roue 6.

Selon une première caractéristique de l'invention, la partie active du pulseur 16 et le capteur 18 sont entièrement logés et mis en place, sans modification ou adaptation préalable de la forme ou de la conception du roulement, à l'intérieur d'un volume délimité,

— radialement par la surface intérieure cylindrique 10 de la protubérance tubulaire 7 servant au centrage du disque 5 ou du tambour de frein et de la roue 6, et

— axialement, d'une part, par un plan passant par l'extrémité libre 20 de la protubérance tubulaire 7, et, d'autre part, par un plan passant par la grande face 21 de la bague intérieure 11 du roulement située du côté de l'écrou de blocage 15.

En effet, le pulseur 16 est simplement emmanché dans l'alésage cylindrique 10 de la protubérance tubulaire 7 sans aucun usinage supplémentaire et sans élément additionnel de fixation rapporté sur le roulement. Ce pulseur est de préférence réalisé par emboutissage et encochage radial, mais tout autre mode de réalisation pourrait être utilisé, par exemple une couronne à denture radiale interne.

Selon une autre caractéristique de l'invention, le pulseur 16 comporte une aile radiale 22 orientée vers l'intérieur et du côté de la bague intérieure 11, cette aile servant, outre son rôle de raidisseur, à réaliser un barrage à toute sortie intempestive de graisse du roulement :

— soit au moyen d'un simple passage étroit ménagé entre l'aile 22 et la bague intérieure 11 du roulement,

— soit par l'adjonction d'une lèvre d'étanchéité 23 surmoulée sur l'aile radiale 22 du pulseur et venant en contact avec la bague intérieure 11 du roulement comme représenté sur le détail de la figure 8.

Enfin, une dernière caractéristique de l'invention consiste à placer le capteur 18 dans un logement ménagé, soit dans l'écrou 15, soit dans une pièce annexe immobilisée sur ou par l'écrou.

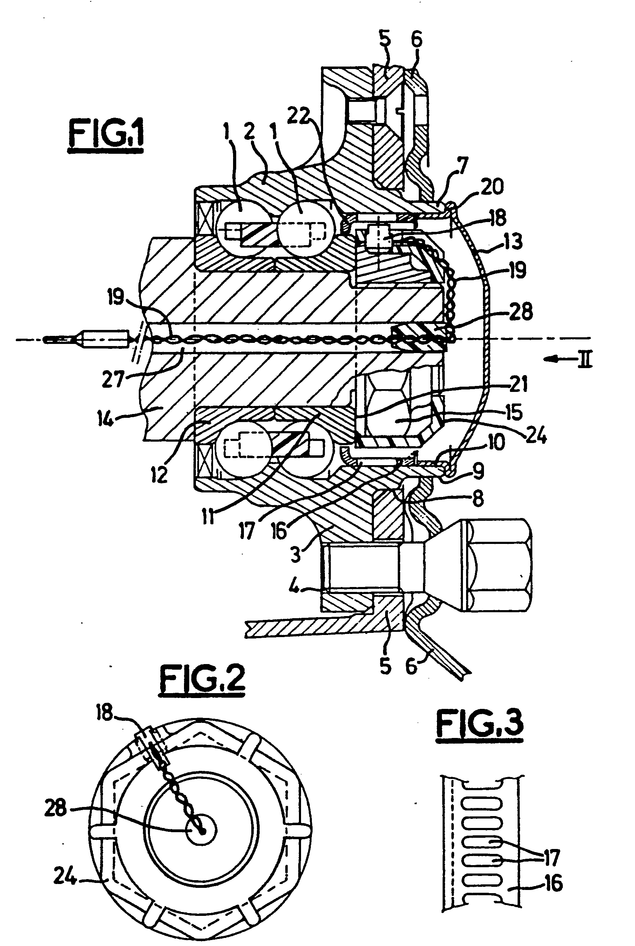

Dans le mode de réalisation des figures 1 et 2, le capteur 18 est emboîté élastiquement dans son logement ménagé dans un capuchon 24 en matière moulée, lui-même fixé par emboîtement élastique sur l'écrou 15 ou sur l'embase de celui-ci.

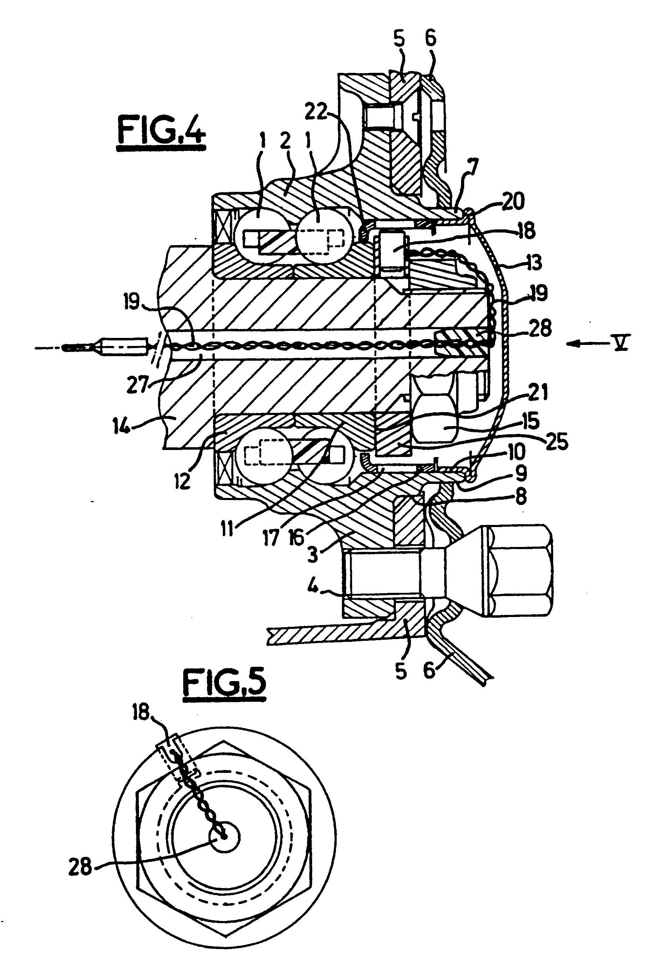

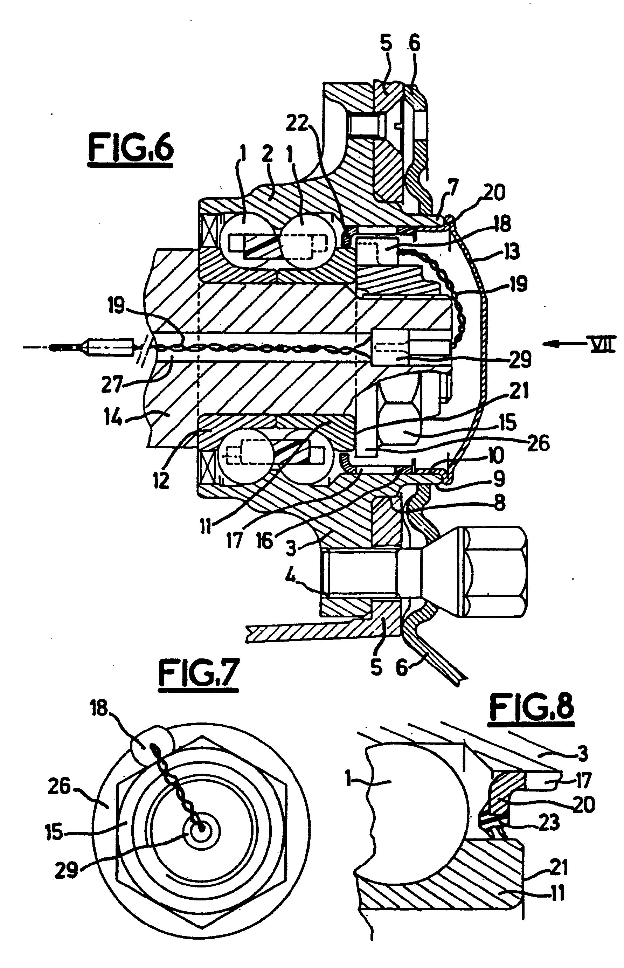

Dans le second mode de réalisation des figures 4 et 5, le capteur 18 est fixé dans une rondelle épaisse 25 qui se trouve bloquée entre l'écrou 15 et la face 21 de la bague intérieure 11 du roulement.

Enfin, dans le mode de réalisation des figures 6 et 7, le capteur 18 est fixé dans un logement ménagé directement dans l'écrou 15 ou dans son embase 26.

Dans tous les cas, les fils 19 qui partent du capteur 18 pour aller vers le dispositif électronique d'analyse passent à l'intérieur d'un canal 27 aménagé dans la fusée selon une disposition connue. Les fils sont maintenus en place par un bouchon 28 qui ferme l'entrée du canal, ou par un connecteur 29 dans l'exemple de réalisation de la figure 6.

Enfin, le capot de protection 13, emmanché dans l'alésage 10 de la protubérance radiale 7, vient isoler du milieu extérieur l'ensemble capteur/pulseur et la partie interne du roulement.

Les principaux avantages du dispositif selon l'invention sont les suivants :

— absence d'encombrement supplémentaire grâce à une intégration totale pulseur/capteur à l'intérieur du volume du roulement.

— absence d'usinage supplémentaire sur le roulement pour la fixation du pulseur, entraînant un coût réduit.

— utilisation d'un même type de roulement pour les montages avec ou sans ABS. Dans les deux cas, le roulement est un roulement intégré standard, le fait d'y adapter ultérieurement l'ensemble pulseur/capteur ne nécessitant aucune modification de forme ni usinage particulier sur le roulement.

— un fonctionnement de l'ensemble pulseur/capteur dans une enceinte fermée et propre, évitant tout risque de pollution et de corrosion, d'où résulte une excellente fiabilité et constance du dispositif.

— excellente protection du pulseur lors des manipulations du roulement, évitant tout risque d'endommagement consécutif à des chocs.

— absence de risque de modification du jeu interne du roulement lors de l'emmanchement du pulseur.

— très bonne accessibilité à l'ensemble de détection en otant simplement le capot de protection, avec possibilité de changer un capteur défaillant sans démonter ni détériorer le roulement.

## Revendications

1. Montage de moyeu de roue non motrice de véhicule équipé d'un ensemble de pulseur et de capteur pour la détection de la vitesse de la roue et comportant un roulement intégré (1, 2, 11, 12) à deux rangées d'éléments roulants (1) situés entre des bagues intérieures de roulement (11, 12) et une bague extérieure (2) munie d'un flanc (3) de fixation d'un disque (5) ou tambour de freinage et de la roue (6), ainsi que d'une protubérance tubulaire (7) dont la partie extérieure sert de portées de centrage (8, 9) du disque (5) ou tambour de freinage et de la roue (6) sur le roulement et dont la partie intérieure cylindrique ou alésage (10) sert de dégagement pour les éléments internes du roulement et pour l'écrou de blocage (15) des bagues intérieures (11, 12) sur une fusée (14), caractérisé par le fait que la partie active (16, 17) du pulseur et le capteur (18) sont logés et mis en place, sans modification ou adaptation préalable de la forme ou de la conception du roulement, à l'intérieur d'un volume délimité radialement par la surface intérieure cylindrique (10) de la protubérance tubulaire (7) servant au centrage du disque (5) ou du tambour de frein et de la roue (6), et axialement, d'une part, par un plan passant par l'extrémité libre (20) de la protubérance tubulaire (7), et d'autre part, par un plan passant par la grande face (21) de la bague intérieure (11) du roulement située du côté de l'écrou de blocage (15), et que le pulseur (16) comporte une partie en forme de couronne cylindrique dans laquelle sont pratiquées des encoches (17) et qui vient s'emmancher dans l'alésage (10) de la protubérance tubulaire (7).

2. Montage de moyeu selon la revendication 1, caractérisé par le fait que le pulseur (16) comporte en outre une partie radiale d'extrémité (22) dirigée vers l'intérieur, située du côté de la bague intérieure (11) du roulement proche dudit écrou (15), et munie d'une ouverture circulaire centrale ménageant avec ladite bague intérieure (11) un passage étroit.

3. Montage de moyeu selon la revendication 2, caractérisé par le fait qu'une lèvre d'étanchéité (23) est surmoulée sur ladite ouverture centrale de l'extrémité radiale (22) du pulseur (16) pour venir frotter contre ladite bague intérieure (11) du roulement.

4. Montage de moyeu selon une des revendications 1 à 3, caractérisé par le fait que le capteur (18) est logé dans un capuchon (24) solidaire de l'écrou de blocage (15) qu'il vient coiffer.

5. Montage de moyeu selon une des revendications 1 à 3, caractérisé par le fait que le capteur (18) est logé dans une rondelle épaisse (25) bloquée entre l'écrou (15) et la bague intérieure (11) de roulement située du côté de cet écrou.

6. Montage de moyeu selon une des revendications 1 à 3, caractérisé par le fait que le capteur (18) est fixé dans un logement ménagé directement dans l'écrou (15) ou dans son embase (26).

7. Montage de moyeu selon une des revendications précédentes, caractérisé par le fait que les fils électriques (19) sortant du capteur (18) pénètrent dans un canal (27) percé dans la fusée et sont immobilisés par rapport à celle-ci par un bouchon (28) ou un connecteur (29) emmanché dans l'orifice du canal (27) situé du côté extérieur au véhicule.

8. Montage de moyeu selon une des revendications précédentes, caractérisé par le fait qu'un capot (13) de protection et de fermeture, emmanché dans l'alésage (10) de la protubérance tubulaire (7), vient isoler du milieu extérieur l'ensemble pulseur/capteur (16, 18).

## Patentansprüche

1. Nichtangetriebene Fahrzeugradnabenanordnung mit einer einen Impulsgeber und einen Aufnehmer aufweisenden Anordnung zur Ermittlung der Drehzahl eines Rades, mit einer eingebauten Wälzlageranordnung (1, 2, 11, 12), die zwei Kränze aus Wälzkörpern (1) enthält, die zwischen Innenlaufringen (11, 12) sowie einem Außenlaufring (2) angeordnet sind, der mit einem Befestigungsflansch (3) für eine Bremsscheibe (5) oder eine Bremstrommel sowie für das Rad (6) versehen ist und einen rohrförmigen Fortsatz (7) trägt, dessen außenliegender Teil als Zentrierfläche (8, 9) der Bremsscheibe (5) oder der Bremstrommel sowie des Rades (6) an der Lageranordnung dient und dessen zylindrischer Innenraum oder Bohrung (10) als Aufnahme für die innenliegenden Teile der Wälzlageranordnung sowie für die Einstellmutter (15) der auf einem Achszapfen (14) sitzenden Innenlagerringe (11, 12) dient, dadurch gekennzeichnet, daß die aktiven Teile (16, 17) des Impulsgebers sowie des Aufnehmers (18) ohne vorherige Veränderung oder Anpassung an die Form oder den Aufbau der Wälzlageranordnung in einem Raum untergebracht und angeordnet sind, der in radialer Richtung durch die zylindrische Innenfläche (10) des rohrförmigen, zur Zentrierung der Bremsscheibe (5) oder der Bremstrommel sowie des Rades (6) dienenden Fortsatzes (7) und in axialer Richtung einerseits durch eine durch das freie Ende des rohrförmigen Fortsatzes (7) gehende Ebene und andererseits von einer Ebene begrenzt ist, die durch die große Fläche (21) des neben der Einstellmutter (15) angeordneten Innenlaufrings (11) geht, und daß der Impulsgeber einen Abschnitt in Gestalt eines zylindrischen Kranzes mit eingearbeiteten Schlitzen (17) aufweist und in die Bohrung (10) des rohrförmigen Fortsatzes (7) eingepreßt ist.

2. Nabenanordnung nach Anspruch 1, dadurch gekennzeichnet, daß der Impulsgeber (16) ferner einen radial sich erstreckenden Randabschnitt (22) aufweist, der nach innen gerichtet ist, an der Seite des Innenlaufrings (11) des der Mutter (15) benachbarten Lagers angeordnet ist und der mit einer zentralen kreisförmigen Öffnung versehen ist, die mit dem Innenlaufring (11) einen engen Spalt begrenzt.

3. Nabenanordnung nach Anspruch 2, dadurch gekennzeichnet, daß eine Dichtlippe (23) an der mittigen Öffnung des radialen Randabschnitts (22) des Impulsgebers (16) anvulkanisiert oder angespritzt od.dgl. ist, die auf dem Innenlaufring (11) des Lagers gleitet.

4. Nabenanordnung nach einem der Ansprüche 1 bis 3, dadurch gekennzeichnet, daß der Aufnehmer (18) in einer Kappe (24) angeordnet ist, die fest auf der Einstellmutter (15) sitzt, die dadurch abgedeckt ist.

5. Nabenanordnung nach den Ansprüchen 1 bis 3, dadurch gekennzeichnet, daß der Aufnehmer (18) in einer dicken Unterlegscheibe (25) untergebracht ist, die zwischen der Einstellmutter (15) und dem neben der Einstellmutter angeordneten Innenlaufring (11) festgeklemmt ist.

6. Nabenanordnung nach den Ansprüchen 1 bis 3, dadurch gekennzeichnet, daß der Aufnehmer (18) in einer Aufnahme befestigt ist, die unmittelbar in der Einstellmutter (15) oder ihrem Bund (26) vorgesehen ist.

7. Nabenanordnung nach einem der vorhergehenden Ansprüche, dadurch gekennzeichnet, daß die von dem Aufnehmer (18) kommenden elektrischen Anschlußdrähte in einen in dem Achszapfen eingebrachten Kanal (27) führen und dort mittels eines Stopfens (28) oder eines Steckers (29) festgelegt sind, der in die an der Außenseite des Fahrzeugs befindliche Öffnung des Kanals (27) eingepreßt ist.

8. Nabenanordnung nach einem der vorhergehenden Ansprüche, dadurch gekennzeichnet, daß eine Schutz- und Abdeckkappe (13) in die Bohrung (10) des rohrförmigen Fortsatzes (7) eingepreßt ist, um die Anordnung aus Impulsgeber/Aufnehmer (16, 18) gegen den Außenraum abzuschirmen.

## Claims

1. Hub assembly of a non-driven vehicle wheel equipped with a transmitter and receiver assembly for measuring the angular velocity of the wheel and comprising an integrated bearing (1, 2, 11, 12) with two rows of rolling elements (1) situated between inner bearing races (11, 12) and an outer race (2) provided with a mounting flange (3) for a brake disc (5) or drum and the wheel (6), and a tubular protuberance (7), the outer part of which serves as surfaces (8, 9) for centring the brake disc (5) or drum and the wheel (6) on the bearing, and the inner cylindrical part or bore (10) of which serves to provide clearance for the inner elements of the bearing and for the lock nut (15) of the inner races (11, 12) on an axle (14), characterised in that the active parts (16, 17) of the transmitter and the receiver (18) are housed and positioned, without any prior modification or adaptation of the shape or design of the bearing, in the interior of a space defined radially by the inner cylindrical surface (10) of the tubular protuberance (7) serving to centre the brake disc (5) or drum and the wheel (6), and axially, on the one hand, by a plane passing through the free end (20) of the tubular protuberance (7) and, on the other hand, by a plane passing through the large face (21) of the inner race (11) of the bearing situated at the lock nut (15), and that the transmitter (16) comprises a part in the form of a cylindrical ring which is provided with slots (17) and is mounted in the bore (10) of the tubular protuberance (7).

2. Hub assembly according to claim 1, characterised in that the transmitter (16) moreover comprises an end radial part (22) directed towards the interior, situated at the inner race (11) of the bearing close to the said nut (15), and provided with a central circular opening which, together with the said inner race (11), forms a narrow passage.

3. Hub assembly according to claim 2, characterised in that a sealing lip (23) is moulded on to the said central opening of the radial end (22) of the transmitter (16) in order to rub against the said inner race (11) of the bearing.

4. Hub assembly according to one of claims 1 to 3, characterised in that the receiver (18) is housed in a cap (24) integral with the lock nut (15) which it covers.

5. Hub assembly according to one of claims 1 to 3, characterised in that the receiver (18) is housed in a thick washer (25) locked between the nut (15) and the inner race (11) of the bearing situated at this nut.

6. Hub assembly according to one of claims 1 to 3, characterised in that the receiver (18) is fixed in a housing formed directly in the nut (15) or in the collar (26) thereof.

7. Hub assembly according to one of the preceding claims, characterised in that the leads (19) from the receiver (18) penetrate into a channel (27) formed in the axle and are fixed relative to said axle by a plug (28) or a connector (29) mounted in the orifice of the channel (27) situated exterior to the vehicle.

8. Hub assembly according to one of the preceding claims, characterised in that a protective and closure cap (13), mounted in the bore (10) of the tubular protuberance (7), isolates the transmitter/receiver assembly (16, 18) from the external atmosphere.

## FIG.1

## FIG.2

## FIG.3

# FIG.4

# FIG.5

**FIG.6**

**FIG.7**

**FIG.8**